# EUROPÄISCHE PATENTSCHRIFT

(11) **EP 2 886 519 B1**
(45) Veröffentlichungstag und Bekanntmachung des Hinweises auf die Patenterteilung: **25.05.2016**
(21) Anmeldenummer: 13197976.7
(22) Anmeldetag: 18.12.2013
(51) Int. Cl.: C03B 5/24, C03B 3/00, C03B 5/033, C03B 17/04

(54) **VERTIKAL-TIEGELZIEHVERFAHREN ZUR HERSTELLUNG EINES GLASKÖRPERS MIT HOHEM KIESELSÄUREGEHALT**
VERTICAL CRUCIBLE PULLING PROCESS FOR PRODUCING A GLASS BODY HAVING A HIGH SILICA CONTENT
PROCÉDÉ D'ÉTIRAGE VERTICAL SOUS UU CREUSET POUR LA FABRICATION D'UN CORPS EN VERRE À HAUTE TENEUR EN SILICE

(43) Veröffentlichungstag der Anmeldung: 24.06.2015
(73) Patentinhaber: Heraeus Quarzglas GmbH & Co. KG, 63450 Hanau (DE)
(72) Erfinder: Buckenauer, Thomas, 63801 Kleinostheim (DE); Pohl, Remo, 61381 Friedrichsdorf (DE); Stenger, Robert, 63826 Geiselbach (DE); Böhler, Alexander, 63743 Aschaffenburg (DE)
(74) Vertreter: Staudt, Armin Walter

(56) Entgegenhaltungen:
- DE-A1- 2 217 725
- DE-A1- 3 227 786
- DATABASE WPI Week 199902 Thomson Scientific, London, GB; AN 1999-018186 XP002723365, -& JP H10 287435 A (TOSHIBA CERAMICS CO) 27. Oktober 1998 (1998-10-27)
- DATABASE WPI Week 199615 Thomson Scientific, London, GB; AN 1996-142916 XP002723366, -& JP H08 29595 A (ISHIKAWAJIMA HARIMA HEAVY IND) 2. Februar 1996 (1996-02-02)

## Beschreibung

### Technischer Hintergrund

Die vorliegende Erfindung betrifft ein Verfahren zum Herstellen eines Glaskörpers mit hohem Kieselsäuregehalt durch Ziehen einer erweichten Glasmasse aus einem länglichen, im Wesentlichen zylindrischen Schmelztiegel, indem in den Schmelztiegel SiO₂-Körnung von oben zugeführt wird, die SiO₂-Körnung auf eine Erweichungstemperatur erhitzt wird, so dass sich die eine Schmelzoberfläche aufweisende, erweichte Glasmasse bildet, die erweichte Glasmasse über eine Bodenöffnung des Schmelztiegels unter Bildung eines Glasstrangs abgezogen, und der Glasstrang zu dem Glaskörper abgelängt wird, wobei durch das Zuführen der SiO₂-Körnung eine Schüttung gebildet wird, die die Schmelzoberfläche teilweise, unter Belassung eines Schmelzrandes bedeckt, und wobei die Schmelzoberfläche optisch erfasst wird.

### Stand der Technik

Ein Glas mit hohem Kieselsäuregehalt im Sinne der vorliegenden Erfindung enthält einen SiO₂-Gehalt von mindestens 90 Gew.-% . Eine Schmelze eines derartigen Glases, das im Folgenden der Einfachheit halber auch als "Quarzglas" bezeichnet wird, wird üblicherweise in sogenannten Tiegelziehverfahren zu zylinderförmigen Glasstrang und letztlich zu Bauteilen aus Quarzglas, insbesondere in Form von Rohren und Stäben mit beliebigen Querschnittsprofil weiterverarbeitet. Ein besonderes Augenmerk liegt dabei darauf, Inhomogenitäten in dem abgezogenen Glasstrang zu vermeiden.

Aus der DE 22 17 725 A ist ein Verfahren gemäß der eingangs genannten Gattung bekannt, wobei der Einsatz eines Schmelztiegels vorgeschlagen wird, bei dem von oben kontinuierlich mittels einer automatischen Beschickungseinrichtung Rohmaterial in Form von Siliziumdioxid-Teilchen zugeführt und anschließend erschmolzen wird. Dabei bildet sich eine zähflüssige homogene Quarzglasmasse aus, die im unteren Bereich des Schmelztiegels über eine im Bodenbereich des Tiegels vorgesehene Ziehdüse nach unten in Form eines Quarzglasrohres abgezogen wird. Die Ziehdüse ist mit einem Gaseinlassrohr für die Zuführung eines Gases direkt in den Bereich der Formgebung verbunden. Das Gaseinlassrohr ist von der Ziehdüse aus nach oben durch den gesamten Schmelztiegel geführt. Für die Zufuhr des teilchenförmigen Rohmaterials ist ein Schütttrichter vorgesehen, der von oben durch eine Öffnung in den Schmelztiegel hineinragt, und dessen unteres Ende oberhalb der Oberfläche der zähflüssigen Glasmasse (im Folgenden als "Schmelzoberfläche" bezeichnet) endet. Zur Erfassung des Pegelstandes der zähflüssigen Glasmasse ist eine visuelle Beobachtungseinrichtung vorgesehen. Die SiO₂-Teilchen fallen aus dem Auslaufrohr des Schütttrichters durch Schwerkrafteinwirkung in den Schmelztiegel und es bildet sich dabei ein Schüttkegel aus dem auf der Schmelzoberfläche aufschwimmenden, körnigen SiO₂-Rohmaterial aus.

Derartige Aufschüttungen von SiO₂-Körnung in einem Schmelztiegel haben unterschiedliche geometrische Formen, die von einer idealen Kegelform bis zu mehr oder weniger flachen Kuppelformen oder Formen mit einem wellenförmigen Querschnittsprofil reichen können. Die unterschiedlichen Formen derartiger Körnungs-Aufschüttungen werden im Folgenden unter den Begriffen "Schüttkegel" oder "Schüttung" subsumiert. Sie können das Einschmelzverhalten der SiO₂-Körnung beeinflussen. Beispielsweise ist aus der DE 38 15 974 C1 ein Schüttkegel zu entnehmen, der bis an die Tiegelinnenwandung reicht. In diesem Fall ist die Ziehdüse an einer Haltestange befestigt, die nach oben durch den Schmelztiegel und durch den Zufuhrstutzen für das SiO₂-Rohmaterial hindurch verläuft.

Ein ähnliches Verfahren ist auch aus JP 10-287435 A bekannt. Hier erfolgt eine gewichtskontrollierte Zuführung des SiO₂-Rohmaterials über einen Fülltrichter, der in den oberen Bereich in den Schmelztiegel hineinragt. Die Ziehdüse wird ebenso wie bei DE 38 15 974 C1 von einer durch den Schmelztiegel nach oben verlaufenden Haltestange gehalten. Das Rohmaterial bildet um diese Haltestange herum einen Schüttkegel aus.

### Technische Aufgabenstellung

Es hat sich gezeigt, dass sich derartige Schüttkegel, insbesondere was den Durchmesser der Grundfläche des Schüttkegels betrifft, mehr oder weniger unkontrolliert ausbilden. Die SiO₂-Teilchen können sich auf der Schmelzoberfläche ungleichmäßig verteilen, was zu einer zeitlich und örtlich inhomogenen Wärmeabstrahlung nach oben führt und die Bildung einer sogenannten "Sinterkruste" an der Tiegelinnenwandung begünstigt. Die Sinterkruste setzt sich aus nicht vollständig erschmolzenen Rohmaterialteilchen und aus Verunreinigungen zusammen, die aus der Schmelze abdampfen und an der Tiegelinnenwandung kondensieren oder re-sublimieren. Teile dieser Sinterkruste können von Zeit zu Zeit abbrechen, wodurch Verunreinigungen schubweise und in unkontrollierbarer Menge in die Glasschmelze gelangen können. Dies führt zu Schwankungen der Schmelzbedingungen und damit einhergehend zu Änderungen der Qualität des abgezogenen Quarzglasbauteils.

Der vorliegenden Erfindung liegt daher die Aufgabe zugrunde, ein kostengünstiges Verfahren für die Herstellung homogener Glaskörper aus einem hochkieselsäurehaltigen Glas durch Ziehen aus der Schmelze anzugeben, das die Ausbildung einer Sinterkruste unterdrückt oder ganz verhindert und so das Einschmelzverhalten der Körnung verbessert.

### Allgemeine Beschreibung der Erfindung

Die vorgenannte Aufgabe wird ausgehend von dem eingangs genannten Verfahren erfindungsgemäß dadurch gelöst, dass bei der optischen Erfassung der Schmelzoberfläche die Breite mindestens eines Teilabschnitts des Schmelzrandes fortlaufend ermittelt wird, und durch die Zufuhrrate der SiO₂-Körnung auf einen Wert innerhalb eines Soll-Breitenbereichs eingestellt wird.

Beim erfindungsgemäßen Verfahren wird die aktuelle Breite des Schmelzrandes fortlaufend ermittelt und auf einem Wert innerhalb vorgegebener Grenzen gehalten. Es genügt, die Breite nur in einem Ringabschnitt des umlaufenden Schmelzrandes zu erfassen.

Der Schmelzrandbreite hängt von mehreren Parametern ab, insbesondere von der Temperatur, der pro Zeiteinheit abgezogenen Masse an Quarzglas (Durchsatz) und von der Zufuhrrate an SiO₂-Körnung. Der zuletzt genannte Parameter dient erfindungsgemäß als Stellgröße für die Schmelzrandbreite.

Die optische Erfassung der Schmelzoberfläche erfolgt "fortlaufend", also kontinuierlich oder von Zeit zu Zeit (diskontinuierlich), wobei bei diskontinuierlicher Erfassung die Prozessregelung umso genauer ist, je kürzer die Zeitabstände zwischen aufeinanderfolgenden Messungen gewählt werden. Zur optischen Erfassung der Schmelzoberfläche wird mindestens ein Teilabschnitt des Schmelzrandes von oben betrachtet. Dabei wird die Breite des Schmelzrandes, definiert als Abstand des Randes des Schüttkegels von der Schmelztiegelinnenwand, ermittelt. Für diese Ermittlung genügt die optische Erfassung der Position des Schüttkegelrandes, wenn der Abstand der Mess-Position zur Tiegel-Innenwand bekannt ist.

Abhängig von der Ist-Größe des Schmelzrandes wird die Zufuhrrate an SiO₂-Körnung im Sinne einer Feinabstimmung so verändert, dass sich eine Größe innerhalb eines Soll-Breitenbereichs einstellt. Dabei kann der Soll-Breitenbereich ein konkreter, vorgegebener Wert sein. Bevorzugt ist es aber ein größerer Wertebereich, so dass ein Eingriff - das heißt eine Veränderung des Körnungs-Zufuhrrate - nur erforderlich ist, wenn die Ist-Größe der Schmelzrandbreite den Wertebereich verlassen hat. Bei einer zu schmalen Ist-Breite wird die Körnungs-Zufuhr verringert, und umgekehrt, bei einer zu großen Schmelzradbreite wird die Körnungs-Zufuhr erhöht.

Die Zufuhrmenge an SiO₂-Körnung wird dabei erfindungsgemäß so kontrolliert, dass der Schüttkegel nicht die Schmelztiegelinnenwand berührt, sondern sich ein umlaufender Schmelzrand mit einer Breite innerhalb eines Soll-Breitenbereichs bildet, der bevorzugt zwischen 0,5 cm und 4 cm und besonders bevorzugt zwischen 1 cm und 2 cm liegt.

Wird der Schmelzrand schmäler als 0,5 cm, so besteht das Risiko der Bildung einer Sinterkruste, die eine Brücke zur Tiegelwand bilden würde und die die im Zusammenhang mit dem Stand der Technik geschilderten Nachteile mit sich bringen würde. Bei einem Schmelzrand breiter als 4 cm ist die freie Schmelzoberfläche und das Risiko von Verdampfung aus der Schmelze groß, was nicht nur zu Schwankungen der Schmelzbedingungen und damit einhergehend zu Änderungen der Qualität des abgezogenen Glaskörpers, sondern auch zu einem Energieverlust und zu einer Dampfbildung führen kann, die die optische Erkennung des Schmelzrandes erschwert.

Ein umlaufender, annähernd kreisringförmiger Schmelzrand in der genannten Größenordnung lässt sich durch optische Erfassung ohne Schwierigkeiten ausmessen. Die Messung in einem einzigen Ringabschnitt wird jedoch bevorzugt, weil so Regelungs-Schwierigkeiten vermeiden werden, die sich ergeben können, wenn die Form des Schmelzrandes von der idealen Kreisringform soweit abweicht, dass die Schmelzrandbreite in einem Ringabschnitt den Sollwert unterschreitet und in einem anderen Ringabschnitt den Sollwert überschreitet.

Dadurch, dass der Schüttkegel aus der zugeführten, hochkieselsäurehaltigen Körnung die Innenwandung des Schmelztiegels nicht berührt, wird die Bildung einer Sinterkruste verhindert oder verlangsamt. Gleichzeitig ist die Schmelzoberfläche im Wesentlichen von der Schüttung bedeckt, so dass sich stabile Schmelzbedingungen einstellen.

Es hat sich als günstig erwiesen, wenn die optische Erfassung der Schmelzoberfläche eine Temperatur-Messung umfasst.

Durch die zusätzliche Messung der Temperatur der Schmelzoberfläche im Bereich des Schmelzrandes können auch bei verstärkter Dampfbildung, die eine rein optische Kontrolle erschweren würde, Informationen über die aktuelle Erstreckung des Schüttkegels und die Breite des Schmelzrandes erhalten werden.

Vorteilhafterweise erfolgt die Temperatur-Messung mittels mindestens eines Pyrometers, das auf eine Position am Rand der Schüttung gerichtet ist.

Am Rand der Schüttung/des Schüttkegels befindet sich nicht aufgeschmolzene SiO₂-Körnung, so dass dort eine geringere Temperatur festgestellt wird, als im Bereich der Schmelzoberfläche. Auf diese Weise lässt sich der Übergang von SiO₂-Körnung zur Schmelze ortsgenau feststellen, so dass aus der Temperatur-Messung gleichzeitig die Breite des Schmelzrandes hervorgeht.

Durch den Einsatz eines weiteren Pyrometers, das beispielsweise auf die Mantelfläche des Schüttkegels gerichtet ist, wird eine noch geringere Temperatur aufgrund der dickeren Körnungsschicht festgestellt als am Rand der Grundfläche des Schüttkegels, woraus sich Schlüsse über den Schüttwinkel des Schüttkegels ziehen lassen, die gegebenenfalls zur Optimierung der Zufuhr der SiO₂-Körnung beitragen. Das Pyrometer kann mit einem Lichtleiter ausgestattet sein, der für eine pyrometrische Erfassung einer Temperatur innerhalb des Schmelztiegels einsetzbar ist und über den die Temperatur der Schmelzoberfläche wie auch der SiO₂-Körnung erfasst werden kann.

Es hat sich weiterhin bewährt, wenn die optische Erfassung der Schmelzoberfläche eine Abbildung des Schmelzrandes mittels mindestens einer Kamera umfasst.

Die mindestens eine Kamera zeichnet Aufnahmen des Schmelzrandes auf, aus denen die Breite des Schmelzrandes hervorgehen. Gegebenenfalls ist die Kamera direkt mit entsprechenden Messmitteln ausgestattet, die die Breite des Schmelzrandes automatisch erfassen oder berechnen und aufzeichnen.

Apparativ hat es sich bewährt zur optischen Erfassung der Schmelzoberfläche eine abbildende Erfassung mit einer Temperatur-Messung zu kombinieren, wobei eine Kamera mit einem Pyrometer eingesetzt wird.

Die beiden Funktionen (abbildende Erfassung und Temperatur-Messung) sind in sogenannten Wärmebildkameras zusammengefasst, die üblicherweise in der Überwachung von Heißprozessen zum Einsatz kommen. Durch die zusätzliche Messung der Temperatur wird eine besonders genaue Prozesskontrolle erreicht. Alternativ zur pyrometrischen Temperatur-Erfassung kann auch ein Thermoelement eingesetzt werden, das bis unmittelbar an die Schmelzoberfläche oder auch an den Schüttkegel der SiO₂-Körnung herangeführt werden kann.

Besonders vorteilhaft ist das erfindungsgemäße Verfahren, wenn die Kamera auf eine Position am Rand der Schüttung gerichtet ist.

Durch die Ausrichtung auf eine exakte Position am Rand der Schüttung/des Schüttkegels ergibt gleichzeitig der Abstand von der Wand des Schmelztiegels und somit die Breite des Schmelzrandes. Es bedarf mit dieser Einstellung keiner speziellen Auswertung von Bildern der Kamera. Bei einer Kombination der Kamera mit einer Temperatur-Erfassung ist die Ausrichtung auf die Position am Rand des Schüttkegels ebenfalls vorteilhaft, da die Temperatur der Schmelzoberfläche gerade an dieser Stelle für das Einschmelzverhalten der SiO₂-Körnung von besonderer Bedeutung ist. Der Einsatz mehrerer Kameras, gegebenenfalls auch in Kombination mit einem Mittel zur Temperatur-Messung, zum optischen Erfassen des Schmelzrandes an verschiedenen Stellen kann die Prozesskontrolle verbessern.

Eine weitere vorteilhafte Ausgestaltung des erfindungsgemäßen Verfahrens besteht darin, dass die Zufuhr der SiO₂-Körnung über ein einzelnes, mittig über der Schüttung endendes Füllrohr erfolgt und dass zwischen dem Ende des Füllrohrsund der Schüttung ein Abstand im Bereich zwischen 5 cm und 20 cm eingestellt wird.

Der Abstand wird durch eine Positionierung des Füllrohres in vertikaler Richtung vorab eingestellt und erforderlichenfalls während des Ziehprozesses korrigiert. Durch diese Anordnung des Füllrohrs wird gewährleistet, dass der Schüttkegel sich mittig im Schmelztiegel auf der Schmelzoberfläche aufbaut, wodurch die Bildung eines gleichmäßigen, umlaufenden Schmelzrandes um den Schüttkegel herum begünstigt wird. Die Schüttung ist dabei vom Füllrohr beabstandet. Bei einem geringeren Abstand als 5 Zentimetern besteht die Gefahr, dass es zu einer Berührung zwischen Füllrohr und Schüttung kommt, so dass sich das Füllrohr befüllt und sich zwischen Füllrohr und Schüttung eine Sinterschicht bildet, die die eigentliche Schüttung überdeckt und unkontrollierbar macht. Der Abstand sollte jedoch 20 cm nicht überschreiten, da sonst das Risiko besteht, dass durch die Gasströmungs-verhältnisse im oberen Bereich des Schmelztiegels ein Teil der aus dem Füllrohr austretenden Körnung in verschiedene Richtungen weggetrieben wird, was zu einer ungleichmäßige Ablagerung von SiO₂-Körnung und damit zu einer nicht reproduzierbaren Schüttungs-Geometrie führt. Dies kann so weit gehen, dass SiO₂-Körnung bis an die Wand des Schmelztiegel gelangt, wo sich dann unerwünschte Sinterkrusten bilden.

Es hat sich außerdem bewährt, wenn die Zufuhrrate der SiO₂-Körnung durch Einwirkung von Vibrationen eingestellt wird.

Die Dosierung der SiO₂-Körnung erfolgt dabei in Abhängigkeit vom Grad an Vibrationen, und ist dadurch im Vergleich zu einer Zuführung allein durch Schwerkraft gleichmäßiger und reproduzierbarer. Die Vibrationen können mit unterschiedlichen Frequenzen und Amplituden eingestellt werden, so dass eine gleichmäßige und, falls erforderlich, auch eine besonders schnelle und kontrollierte Zufuhr der Körnung sichergestellt ist. Die Vibrationen können durch einen Rüttler auf die SiO₂-Körnung einwirken, wobei der Rüttler gleichzeitig ein Vorratsgefäß für die SiO₂-Körnung umfassen kann, aus dem die Körnung in den Schmelztiegel zugeführt wird.

Vorteilhafterweise erfolgt die Zufuhr der SiO₂-Körnung kontinuierlich.

Eine kontinuierliche, also nicht zeitweise unterbrochene Zufuhr gewährleistet konstante Schmelzbedingungen über einen langen Produktionszeitraum. Das Nachregeln der Zufuhr aufgrund der optischen Erfassung der Breite des Schmelzrandes beeinflusst die kontinuierliche Zufuhr der SiO₂-Körnung nur geringfügig, indem die Zufuhrrate je nach Bedarf beschleunigt oder gedrosselt wird.

Für eine gleichmäßige Prozessregelung ist es wünschenswert, wenn große Änderungen der Stellgröße möglichst unterbleiben. Im Hinblick hierauf hat es sich als vorteilhaft erwiesen, wenn zur Einstellung der Schmelzrandbreite auf einen Wert innerhalb des Soll-Breitenbereichs eine am Durchsatz der abgezogenen Glasmasse orientierte Nominal-Zufuhrrate an SiO₂-Körnung um maximal 10% verändert wird.

Die Nominal- Zufuhrrate an SiO₂-Körnung entspricht dabei derjenigen Zufuhrrate, die sich rein rechnerisch anhand des Quarzglas-Durchsatzes ergibt. Kurzzeitige Änderungen dieser Rate von weniger als +/-10 % (bezogen auf den Nominalwert) wirken sich auf den Ziehprozess nicht nennenswert aus. Es hat sich gezeigt, dass sich die Schmelzrandbreite bei Änderungen der Zufuhrrate in diesem Größenbereich (< 10%) innerhalb weniger Minuten (<20 min) auf einen Wert innerhalb des Soll-Breitenbereichs einstellen lässt.

### Ausführungsbeispiel

Nachfolgend wird die Erfindung anhand einer Patentzeichnung und eines Ausführungsbeispiels näher erläutert. Als einzige Figur zeigt:

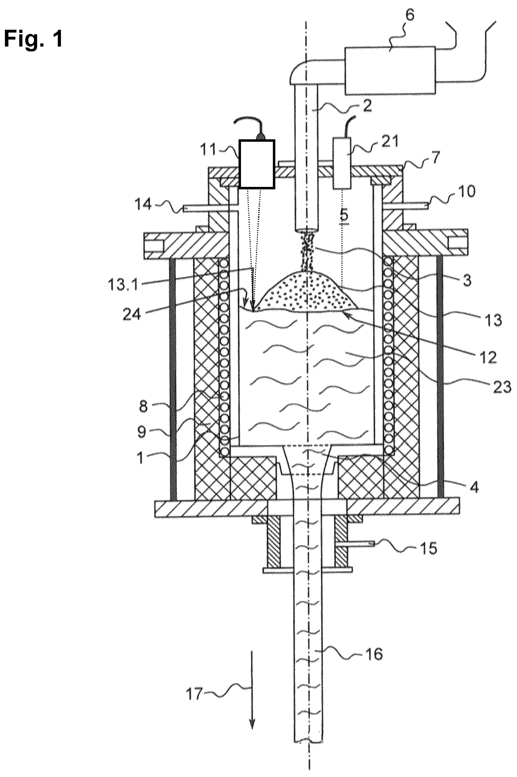

- **Figur 1**: eine Vorrichtung zur Durchführung des erfindungsgemäßen Verfahrens in schematischer Darstellung.

In einen Schmelztiegel 1 aus Wolfram wird über ein einzelnes Füllrohr 2 kontinuierlich SiO₂-Körnung 3 gefüllt. Die SiO₂-Körnung 3 ist oberhalb des Schmelztiegels 1 in einem Behälter 6 bevorratet, der eine Rütteleinrichtung umfasst. Der Schmelztiegel 1 besitzt eine Bodenauslassöffnung 4, durch die eine geschmolzene Quarzglasmasse austritt und als Strang 16 abgezogen wird.

Der Schmelztiegel 1 ist nach oben mit einem Deckel 7 abgeschlossen, durch den in der Mitte das Füllrohr 2 in den Tiegel 1 hineinragt. Außerdem ist seitlich am Deckel 7 mindestens eine Öffnung vorgesehen, durch die hindurch die Schmelzoberfläche der erweichten Glasmasse 23 am Rand des Schmelztiegels 1 und die zugeführte SiO₂-Körnung 3 mittels einer Beobachtungseinrichtung 11 optisch erfasst werden können.

Zum Erhitzen des Schmelztiegels 1 ist eine Widerstandsheizspule 8 um den Tiegel angeordnet. Diese Spule ist nach außen von einer Wärmeisolation 9 umgeben. Der Raum zwischen der Widerstandsheizspule 8 und der Tiegelaußenwandung wird mit einem wasserstoffhaltigen Schutzgas gespült, das über die Stutzen 10 und 15 zugeführt und im Bereich des unteren Endes des Tiegels 1 abgeführt wird. In den Schmelztiegel 1 wird ein Helium-Wasserstoff-Gasgemisch über einen Einlass 14 in den oberen Bereich des Schmelztiegel-Innenraum 5 eingeleitet.

Durch die Zufuhr der SiO₂-Körnung 3 über das Füllrohr 2 bildet sich auf der Schmelzoberfläche 12 der zuvor zu einer erweichten Glasmasse 23 erschmolzenen SiO₂-Körnung 3 ein Schüttkegel 13 aus, der von einem umlaufenden Schmelzrand 24 umgeben ist.

Nachfolgend wird das erfindungsgemäße Verfahren anhand eines Ausführungsbeispiels und Figur 1 näher erläutert.

Über das Füllrohr 2 wird die SiO₂-Körnung 3 aus dem mit einer Rütteleinrichtung verbundenen Vorratsbehälter 6 in den Schmelztiegel 1 eingespeist. Durch die Rütteleinrichtung wird eine kontinuierliche Zufuhr an SiO₂-Körnung 3 eingestellt. Grundsätzlich kann die Rütteleinrichtung auch vom Vorratsbehälter getrennt angeordnet sein und nur auf die Zufuhrleitung für die SiO₂-Körnung in den Schmelztiegel einwirken. Die Zufuhrrate an SiO₂-Körnung richtet sich nach dem berechneten Durchsatz für die Herstellung von Quarzglasbauteilen mit vorgegebener Geometrie und Größe (Rohre oder Stäbe mit entsprechenden Durchmessern, Wandstärken, Längen).

Die zugeführte SiO₂-Körnung 3 bildet im Schmelztiegel 1 auf der zuvor zu einer erweichten Glasmasse 23 erschmolzenen SiO₂-Körnung einen Schüttkegel 13 aus. Das Füllrohr 2 wird zu Beginn des Ziehprozesses soweit vertikal nach oben verschoben, dass sich zwischen dem Ende des Füllrohres 2 und dem Schüttkegel 13 ein Abstand von etwa 10 cm einstellt. Dadurch werden einerseits die Ausbildung einer Sinterschicht zwischen Füllrohr 2 und Schüttkegel 13 und andererseits die Ausbildung einer Sinterkruste an der Tiegel-Innenwandung durch Verblasen der SiO₂-Körnungsteilchen verhindert.

Im Schmelztiegel 1 werden die Siliziumdioxid-Teilchen 3 auf eine Temperatur von etwa 2100 °C bis 2200 °C erhitzt. Dabei bildet sich im unteren Bereich des Schmelztiegels 1 eine homogene, blasenfreie Glasmasse 23 aus, auf der der Schüttkegel 13 aus SiO₂-Teilchen 3 aufschwimmt, ohne dass dieser Kontakt zur Wand des Schmelztiegels 1 hat, vielmehr bildet die Schmelzoberfläche 12 um die Grundfläche des Schüttkegels herum einen umlaufenden Schmelzrand 24 von etwa 2 cm Breite.

Die Breite des Schmelzrandes 24 wird mittels der Beobachtungseinrichtung 11 optisch erfasst. Diese umfasst eine Kamera, die im Deckel 7 des Schmelztiegels 1 oberhalb des Schmelzrandes 24 angeordnet ist und mittels derer ein Bild der Schmelzoberfläche 12 im Bereich des Schmelzrandes 24 aufgezeichnet und vermessen wird. Die Kamera ist gegebenenfalls von einer Ausgangsposition abweichend so einstellbar, dass der Rand 13.1 des Schüttkegels 13 erfasst wird. Durch die Ausrichtung der Kamera ist bei Kenntnis der Ausgangsposition direkt die Breite des Schmelzrandes 24 ermittelbar, ohne dass es der Aufnahme eines Bildes der vollen Breite bedarf. Die so ermittelte Breite des Schmelzrandes 24 ist eine Regelgröße zur Feinabstimmung der Zufuhr der SiO₂-Körnung 3, die neben der Basisregelgröße in Abhängigkeit vom Durchsatz dazu dient, dass ein umlaufender Schmelzrand 24 um den Schüttkegel 13 herum in einer Breite zwischen 1 cm und 2 cm (=Soll-Breitenbereich) während des Schmelzprozesses erhalten bleibt. Gleichzeitig mit der optischen Erfassung des Schmelzrandes 24 erfolgt die Messung und Überwachung der Temperatur in diesem Bereich. Dazu wird ein Pyrometer (nicht dargestellt) eingesetzt, das in der Beobachtungseinrichtung 11 integriert ist und dessen Messfleck mittels eines Lichtleiters exakt auf den Schmelzrand 24 oder den Rand 13.1 des Schüttkegels 13 aus SiO₂-Körnung 3 übertragen wird. Ein weiteres Pyrometer 21 kann in einem definierten Abstand vom ersten Pyrometer auf die Mantelfläche des Schüttkegels 13 gerichtet sein. Damit kann die Temperatur der Körnungsschicht in dieser Position des Schüttkegels 13 erfasst werden, wodurch Temperatur-Trends erfasst werden können.

Die erweichte Glasmasse 23 fließt über die Bodenauslassöffnung 4 aus und wird anschließend in Form eines zylinderförmigen Quarzglasstrangs 16 nach unten abgezogen, wie dies der Richtungspfeil 17 andeutet. Von dem erkalteten Quarzglasstrang 16 in Form eines Stabes mit einem Durchmesser von 30 mm werden Teilstücke in der gewünschten Länge abgetrennt.

Bei einer durchschnittlichen Abziehgeschwindigkeit des Quarzglasstabes von 11 m/h ergibt sich eine nominale Zufuhrrate an SiO₂-Körnung von etwa 17 kg/h.

Unterschreitet die Breite des Schmelzrandes 24 den unteren Grenzwert von 1 cm, wird die Zufuhrrate an SiO₂-Körnung solange um 5 % bezogen auf diesen Nominalwert verringert, bis der untere Grenzwert wieder überschritten ist.

Umgekehrt, wird bei Überschreitung des oberen Grenzwerts von 1 cm die Zufuhrrate an SiO₂-Körnung solange um etwa 5% bezogen auf den Nominalwert erhöht, bis die aktuelle Breite wieder im Soll-Breitenbereich liegt.

Dies geschieht in der Regel innerhalb weniger Minuten. Diese kurzzeitige Erhöhung beziehungsweise Verringerung der nominalen Zufuhrrate ist so geringfügig, das sie sich auf Durchsatz und sonstige Prozessregelung nicht nennenswert auswirkt.

## Patentansprüche

1. Verfahren zum Herstellen eines Glaskörpers mit hohem Kieselsäuregehalt durch Ziehen einer erweichten Glasmasse (23) aus einem länglichen, im Wesentlichen zylindrischen Schmelztiegel (1), indem in den Schmelztiegel (1) SiO₂-Körnung (3) von oben zugeführt wird, die SiO₂-Körnung (3) auf eine Erweichungstemperatur erhitzt wird, so dass sich die eine Schmelzoberfläche (12) aufweisende, erweichte Glasmasse (23) bildet, die erweichte Glasmasse (23) über eine Bodenöffnung des Schmelztiegels (1) unter Bildung eines Glasstrangs (16) abgezogen, und der Glasstrang (16) zu dem Glaskörper abgelängt wird, wobei durch das Zuführen der SiO₂-Körnung (3) eine Schüttung (13) gebildet wird, die die Schmelzoberfläche (12) teilweise, unter Belassung eines Schmelzrandes (24) bedeckt, und wobei die Schmelzoberfläche (12) optisch erfasst wird, **dadurch gekennzeichnet, dass** bei der optischen Erfassung der Schmelzoberfläche (12) die Breite mindestens eines Teilabschnitts des Schmelzrandes (24) fortlaufend ermittelt und durch die Zufuhrrate der SiO₂-Körnung (3) auf einen Wert innerhalb eines Soll-Breitenbereichs eingestellt wird.

2. Verfahren nach Anspruch 1, **dadurch gekennzeichnet, dass** die Zufuhrrate der SiO₂-Körnung (3) derart eingestellt wird, dass sich ein umlaufender Schmelzrand (24) mit einer Breite zwischen 0,5 cm und 4 cm, bevorzugt mit einer Breite zwischen 1 cm bis 2 cm bildet.

3. Verfahren nach Anspruch 1 oder 2, **dadurch gekennzeichnet, dass** die optische Erfassung der Schmelzoberfläche (12) eine Temperatur-Messung umfasst.

4. Verfahren nach Anspruch 3, **dadurch gekennzeichnet, dass** die Temperatur-Messung mittels mindestens eines Pyrometers erfolgt, das auf eine Position am Rand (13.1) der Schüttung (13) gerichtet ist.

5. Verfahren nach einem der vorhergehenden Ansprüche, **dadurch gekennzeichnet, dass** die optische Erfassung der Schmelzoberfläche (12) eine Abbildung des Schmelzrandes (24) mittels mindestens einer Kamera umfasst.

6. Verfahren nach einem der vorhergehenden Ansprüche, **dadurch gekennzeichnet, dass** zur optischen Erfassung der Schmelzoberfläche (12) eine abbildende Erfassung mit einer Temperatur-Messung kombiniert ist, wobei eine Kamera mit einem Pyrometer eingesetzt wird.

7. Verfahren nach Anspruch 5 oder 6, **dadurch gekennzeichnet, dass** die Kamera auf eine Position am Rand (13.1) der Schüttung (13) gerichtet ist.

8. Verfahren nach einem der vorhergehenden Ansprüche, **dadurch gekennzeichnet, dass** die Zufuhr der SiO₂-Körnung (3) über ein einzelnes, mittig über der Schüttung (13) endendes Füllrohr (2) erfolgt und zwischen dem Ende des Füllrohrs (2) und der Schüttung (13) ein Abstand im Bereich zwischen 5 cm und 20 cm eingestellt wird.

9. Verfahren nach einem der vorhergehenden Ansprüche, **dadurch gekennzeichnet, dass** die Zufuhrrate der SiO₂-Körnung (3) durch Einwirkung von Vibrationen eingestellt wird.

10. Verfahren nach einem der vorhergehenden Ansprüche, **dadurch gekennzeichnet, dass** die Zufuhr der SiO₂-Körnung (3) kontinuierlich erfolgt.

11. Verfahren nach einem der vorhergehenden Ansprüche, **dadurch gekennzeichnet, dass** zur Einstellung der Schmelzrandbreite auf einen Wert innerhalb des Soll-Breitenbereichs eine am Durchsatz der abgezogenen Glasmasse orientierte Nominal-Zufuhrrate an SiO₂-Körnung (3) um maximal 10% verändert wird.

## Claims

1. A method for producing a glass body with high silicic-acid content by drawing a softened glass mass (23) from an elongated, substantially cylindrical crucible (1) in that SiO₂ granules (3) are supplied from above into the crucible (1), the SiO₂ granules (3) are heated to a softening temperature, so as to form the softened glass mass (23) which comprises a melt surface (12), the softened glass mass (23) is drawn off via a bottom opening of the crucible (1) so as to form a glass strand (16), and the glass strand (16) is cut to length to obtain the glass body, wherein due to the supply of the SiO₂ granules (3) a bulk heap (13) is formed that partly covers the melt surface (12) while leaving a melt edge (24), and wherein the melt surface (12) is optically detected, **characterized in that** during the optical detection of the melt surface (12) the width of at least a sub-section of the melt edge (24) is continuously determined and is set to a value within a target width range through the supply rate of the SiO₂ granules (3).

2. The method according to claim 1, **characterized in that** the supply rate of the SiO₂ granules (3) is set such that a surrounding melt edge (24) is formed with a width between 0.5 cm and 4 cm, preferably with a width between 1 cm to 2 cm.

3. The method according to claim 1 or 2, **characterized in that** the optical detection of the melt surface (12) comprises a temperature measurement.

4. The method according to claim 3, **characterized in that** the temperature measurement is carried out by means of at least one pyrometer which is directed to a position on the edge (13.1) of the bulk heap (13).

5. The method according to any one of the preceding claims, **characterized in that** the optical detection of the melt surface (12) comprises an imaging of the melt edge (24) by means of at least one camera.

6. The method according to any one of the preceding claims, **characterized in that** for the optical detection of the melt surface (12) an imaging detection is combined with a temperature measurement, wherein a camera is used with a pyrometer.

7. The method according to claim 5 or 6, **characterized in that** the camera is directed to a position on the edge (13.1) of the bulk heap (13).

8. The method according to any one of the preceding claims, **characterized in that** the SiO₂ granules (3) are supplied via an individual filling tube (2) terminating centrally above the bulk heap (13), and a distance ranging from 5 cm to 20 cm is set between the end of the filling tube (2) and the bulk heap (13).

9. The method according to any one of the preceding claims, **characterized in that** the supply rate of the SiO₂ granules (3) is adjusted through the action of vibrations.

10. The method according to any one of the preceding claims, **characterized in that** the SiO₂ granules (3) are supplied continuously.

11. The method according to any one of the preceding claims, **characterized in that** for the setting of the melt edge width to a value within the target width range a nominal supply rate of SiO₂ granules (3) which is based on the throughput of the drawn-off glass mass is changed by not more than 10%.

## Revendications

1. Procédé pour la fabrication d'un corps de verre avec une teneur élevée en acide silique par tirage d'une masse de verre ramollie (23) à partir d'un creuset allongé essentiellement cylindrique (1), dans le fait que les grains de SiO₂ (3) sont amenés par le haut dans le creuset (1), les grains de SiO₂ (3) sont chauffés à une température de ramollissement de manière à former la masse de verre ramollie (23) et présentant une surface fondue (12), la masse de verre ramollie (23) est extraite par une ouverture de fond du creuset (1) en formant un cordon de verre (16), et le cordon de verre (16) est découpé en un corps de verre, l'amenée des grains de SiO₂ (3) formant une matière en vrac (13) qui recouvre partiellement la surface fondue (12) en laissant un bord de fusion (24) et la surface fondue (12) étant détectée optiquement, **caractérisé en ce que**, lors de la détection optique de la surface fondue (12), la largeur d'au moins une section du bord de fusion (24) est déterminée en permanence et est ajustée à une valeur comprise dans une plage théorique de largeurs par le taux d'amenée des grains de SiO₂ (3).

2. Procédé selon la revendication 1, **caractérisé en ce que** le taux d'amenée des grains de SiO₂ (3) est ajusté de manière à former un bord de fusion (24) circulaire d'une largeur comprise entre 0,5 cm et 4 cm, de préférence avec une largeur comprise entre 1 cm et 2 cm.

3. Procédé selon la revendication 1 ou 2, **caractérisé en ce que** la détection optique de la surface fondue (12) comprend une mesure de température.

4. Procédé selon la revendication 3, **caractérisé en ce que** la mesure de la température est effectuée au moyen d'au moins un pyromètre qui est dirigé sur une position au bord (13.1) de la matière en vrac (13).

5. Procédé selon l'une des revendications précédentes, **caractérisé en ce que** la détection optique de la surface fondue (12) comporte une image du bord de fusion (24) au moyen au moins d'une caméra.

6. Procédé selon l'une des revendications précédentes, **caractérisé en ce que** pour la détection optique de la surface fondue (12), une détection par image est combinée à une mesure de température, en utilisant une caméra avec un pyromètre.

7. Procédé selon la revendication 5 ou 6, **caractérisé en ce que** la caméra est dirigée sur une position au bord (13.1) de la matière en vrac (13).

8. Procédé selon l'une des revendications précédentes, **caractérisé en ce que** l'amenée des grains de SiO₂ (3) s'effectue par un seul tube de remplissage se terminant au milieu au-dessus de la matière en vrac (13) et entre l'extrémité du tube de remplissage (2) et de la matière en vrac (13), il est prévu une distance comprise entre 5 cm et 20 cm.

9. Procédé selon l'une des revendications précédentes, **caractérisé en ce que** le taux d'amenée des grains de SiO₂ (3) est ajusté par l'action de vibrations.

10. Procédé selon l'une des revendications précédentes, **caractérisé en ce que** l'amenée des grains de SiO₂ (3) s'effectue en continu.

11. Procédé selon l'une des revendications précédentes, **caractérisé en ce que** pour l'ajustement de la largeur du bord de fusion à une valeur à l'intérieur de la plage théorique, un taux d'amenée nominal de grains de SiO₂ (3), orienté au débit de la masse de verre extraite, est modifié de 10 % maximum.
